# EUROPEAN PATENT APPLICATION

(11) **EP 1 637 033 A1**
(43) Date of publication of application: **22.03.2006**
(21) Application number: 05255319.5
(22) Date of filing: 31.08.2005
(51) Int. Cl.: A01G 31/02, A01G 9/14

(54) **Plant growing system and method**

(30) Priority: 01.09.2004 GB 0419344
(71) Applicant: Evans, George Howard, Near Selby YO8 8NH (GB)
(72) Inventor: Evans, George Howard, Near Selby YO8 8NH (GB)
(74) Representative: Wilson, Peter

(57) **Abstract**

An apparatus, growing system and method are described for the cultivation of plants, and especially vine-like plants, in a controlled environment. The apparatus provides an elevated support framework suitable for use with, and in particular incorporating, a growing system of the type comprising a plurality of growing rows incorporating a growing base capable of supporting a growing medium, and upwardly extending suspension means engaging with the support framework. The framework has a first array of generally parallel elongate row supporting members arrayed in pairs with a first spacing between each member and a second different spacing between adjacent pairs, and at least one second array of similarly arrayed elongate row supporting members, the space between pairs being such as to allow the first and second arrays to be interdigitated. The apparatus also includes means to translate the at least one second array transversely relative to the first array so as to enable change of spacing between the rows whilst in situ, to ensure optimum growing efficiency.

## Description

The invention relates to a system and method for the growing of plants, and especially tall vine-like plants that produce fruit, flowers or vegetables, in a controlled growing environment, and for example under glass.

The cultivation of plants in a controlled growing volume, where conditions vary from external ambient conditions, is long established in particular in relation to the growing of fruit or vegetables to enhance productivity, for example by increasing yield, extending the growing season etc. In particular, it can often be desirable when such crops are cultivated in a more temperate environment to grow the plants in conditions of elevated temperature and/or humidity. It is well known for example to grow such plants in a controlled volume under glass or an equivalent structure, to exploit the effect of the greenhouse to create enhanced growing conditions. Plants are typically grown in rows, with access between the rows for cultivation and harvesting.

It is often desirable to be able to move crop around within the growing volume. Plants within a given volume maybe at a variety of stages of development, to produce steady yield across a growing season, and to maximise yield (for example in the case of vine-like plants, earlier and later maturing plants could be growing to different heights within the volume). The best arrangement for plants to give access for cultivation or harvest might not be the same as the optimum growing arrangement. It might even be desirable to reorganise plants during the course of the day to make best use of light and maximise yield, although this is generally considered impractical for fruit and vegetable production other than at the propagation stage.

Fixed arrangements of rows represent a compromise. There is clearly a general desire to enable such moving and reorganising of plants within the volume to take place with greater efficiency, ideally with minimal user intervention.

It is also the case that the environment within such a growing volume is optimised for growth of the crop, but not as a working environment. For example, levels of heat and humidity will typically be significantly higher than ambient, and can make conditions unpleasant and impractical for a human worker within the volume for any length of time, for example to care for growing crops, to harvest crops etc. The growing environment may be compromised because of the need to provide bearable working conditions. An alternative approach, to remove a plant from the greenhouse environment when it requires such attention, is slow and inefficient.

It is also the case that mechanisation of crop work within the growing volume is difficult because of constraints on space and access.

Growing systems for vine-like plants, such as tomato plants, are well developed. In one particularly widely used system, plants are cultivated, supported by strings which hang from wires which are in turn supported by the greenhouse structure. Plants grow up, supported by these strings, from suitable growing media. Plants may be suspended individually, or more typically in rows, for example with an elongate tray containing growing material being suspended to accommodate such a row. In many instances these strings are height adjustable allowing for adjustment of the plant height as it grows in a process commonly known as layering. However the support wires are static so the spacing of rows of plants is by necessity a compromise and the growing media is normally at or near to ground level so new plants introduced to the area will be heavily shaded and fail to prosper.

It is an object of the invention to provide a growing system and method which includes a plant handling capability that mitigates some or all of the above disadvantages, and that in particular facilitates the efficient movement of growing plants within a growing volume to and/or between a growing volume and an external handling area.

It is a further object of the invention to provide a system and method incorporating a plant handling capability which is particularly suited to adaptation for use with suspended growing systems for vine-like plants.

Thus, according to the invention in a first aspect an apparatus for the cultivation of plants in a controlled environment comprises an elevated support framework suitable for use with a growing system of the type comprising a plurality of growing rows incorporating a growing base capable of supporting a growing medium, and upwardly extending suspension means engaging with the support framework, the said framework comprising a first array of generally parallel elongate row supporting members arrayed in pairs with a first spacing between each member and a second different spacing between adjacent pairs, at least one second array of similarly arrayed elongate row supporting members, the space between pairs being such as to allow the first and second arrays to be interdigitated; the system further comprising means to translate the at least one second array transversely relative to the first array.

In a further aspect of the invention, an apparatus as above described is provided in conjunction with a plurality of growing rows each incorporating a growing base such as a trough capable of supporting a growing medium, and upwardly extending suspension means engaging with the support framework.

The invention is intended to change spacing between the rows whilst in situ, to ensure optimum growing efficiency. There are several reasons why this might be desirable.

In fixed systems, it is known to array plants in suitably spaced rows, for example in paired rows with wider spacing between the pairs, to provide access aisles for cultivation or harvesting. In accordance with the invention, such an access row can be created temporarily and then rows repositioned to maximise growing efficiency.

A second array is in effect translatable laterally from a first configuration in which all of the elongate row support members in the first and second array are laterally at a first spacing to a second configuration in which alternating pairs of support members are respectively more and less closely spaced. The less close spacing provides corridors for access and treatment of the growing plant. Once the growing plant has been attended to, the frameworks may be restored to a preferred growing configuration.

Different spacing between rows might also be desirable for example at different stages in the growth cycle or at different times during the day. Spacing may be varied during the day to optimise use of light, or during the growing season to accommodate plants at different stages of development, and for example to afford greater growing space and access to light to plants at a later stage of development.

In a particularly effective exploitation of this feature, an apparatus in accordance with the invention is used to support two generations of growth. Apparatus comprising two arrays of elongate support members is particularly suited to this application. On each array of support members, it is intended that a first support member in each pair should carry a first generation, and a second support member in each pair should carry a second generation. With suitable spacing within each array it will be possible to create a structure wherein, by translation of the second framework, the apparatus is translatable between a first position in which more space is provided between growing plants of the first generation and a second position wherein more space is provided between growing plants of the second generation. This allows for maximum use of the available growing conditions as successive generations are cultivated, matured and harvested.

In a most convenient arrangement, the individual arrays making up the elevated support framework are disposed in a generally horizontal planar array vertically above one another. The arrangement is such that the elongate supports are laterally arrayed in a generally parallel and interdigitated manner. At least the second array is translatable in a transverse direction relative to the first array, for example by provision of wheels, bearings, sliding contact surfaces, or other like means to maintain a sliding and/or rolling contact between the two arrays.

In a particularly preferred embodiment, the apparatus comprises exactly two arrays with, for example, the upper array being translatable relative to the lower array on suitable translational means. In a preferred embodiment, the lower array comprises transverse guide rails or the like on which rolling or sliding engagement means such as wheels, carriages or the like associated with the second array are placed to facilitate the necessary translational motion.

Suitable transverse drive means are provided to effect the translational motion.

In a particularly preferred embodiment an apparatus unit in accordance with the invention is further arranged to be translatable in a longitudinal direction relative to the rows. In accordance with this embodiment, the system allows transverse movement of individual arrays within a framework apparatus unit to alter the relative space in between rows within an apparatus unit, and also longitudinal translation of the entire apparatus unit. It is intended that this latter motion alternative can be adapted to allow movement of the entire unit about within a growing volume.

In the preferred embodiment, an apparatus unit comprises a pair of framework arrays, one disposed above the other. In accordance with this embodiment, one of the said pairs of arrays, for example the lower array, is provided with suitable means to effect translational movement in a longitudinal direction within a growing environment, and the other of the pair of arrays, for example the upper array, is provided with means to effect transverse translational movement relative to the first array.

The apparatus unit is in effect a carriage for a plurality of growing rows which can then be translated in a longitudinal direction. Conveniently, the translational means to effect this longitudinal motion comprise guide rails, in particular elevated guide rails, onto which the carriage comprised of the apparatus unit may be mounted for translational movement, for example by means of suitable sliding and or rolling contact wheels, carriages or the like, about a growing space.

Where a plurality of carriages are provided within a system, each preferably comprises equivalent, and in particular substantially identical, arrays in terms of number, extent and spacing.

In a particularly preferred aspect of the invention, a system for the cultivation of plants in a controlled environment comprises at least one preferably elevated track on which are mounted so as to be translatable therealong a plurality of carriages comprising apparatus units in accordance with the foregoing. In this manner, when the system is fully assembled carriages may be translated about the track, and hence relocated relative to each other within a growing volume or elsewhere.

In particular, the track is at least partially disposed within a growing volume, comprising an at least partial volume enclosure so set up as to allow growing conditions within the growing volume to be varied from ambient. For example the enclosure is a greenhouse or like glass or other structure. The track arrangement of the invention allows carriage units to be moved within and/or reorganised within and/or moved into and out of the growing volume.

In practice, growing areas for the produce to which the invention relates can be very large, and might comprise a plurality of such tracks, again preferably generally parallel and in a longitudinal direction relative to the primary row direction of the basic growth units. Each track may be separate. However, to maximise the effective potential in the track system in allowing reorganisation of individual carriage units the track is preferably so arranged that carriage units can also be moved between track rows. For example, the track may be a continuous or semi-continuous circuit. In an alternative preferred embodiment, transverse track elements may be provided within the system, and for example at the end or ends of the track rows, which allow the carriage to be translated in a transverse direction and hence relocated onto a different track row.

In a particularly preferred embodiment, a separate working area is provided either within or external to the growing volume, wherein conditions differ from those in the growing volume, and for example may be ambient or may be optimised for working, rather than for growing. The at least one track extends partly within the growing volume and partly within the working area, permitting transfer of a carriage unit between the growing volume and the working area.

The growing volume is environmentally separated from the working area, and from ambient external conditions, to allow conditions to be created which are more conducive to growth of the crop plant in familiar manner. For example the environmentally separate volume is the volume within a conventional greenhouse. It will be appreciated from this that the requirement for environmental separation, and consequent requirement of enclosure of the volume, is not absolute but merely needs to be to the extent necessary as to allow the desired growth conditions to be created and maintained within the growing volume. A working area may be provided within the enclosure comprising the growing volume, being environmentally isolated therefrom to sufficient extent as to allow more comfortable working conditions to be created and maintained therewithin, or may be located externally of the growing volume.

Where used herein, the term continuous track is intended to imply that any point on such a track can be reached from any other point, and that in principle a carriage comprising an apparatus unit could be translated from any point on the track to any other point on the track. A portion of the or each continuous track may be formed into, but is not necessarily formed into, a closed loop. The continuous track preferably further includes siding and/or loop portions to give greater flexibility of movement of individual growing rows, for example to divert a row to a working area and/or to reorder rows and/or to take a row out of continuous order to otherwise treat, to harvest the crop etc.

A system in accordance with the invention may comprise a plurality of separate continuous tracks, and for example more than one such separate continuous track may be disposed within a single growing volume. In these circumstances, tracks may be disposed adjacently, for example with the elongate primary row supports parallel to, perpendicular to, or in other suitable and for example adjustable orientation relative to each other, or may be arranged with such primary row support substantially parallel and interdigitated. This latter arrangement is particularly suited for use in combination with a support system in accordance with the second aspect of the invention below.

A system in accordance with the invention in which both row spacing can be adjusted and carriage units can be moved about within a growth space offers a particularly flexible growing system in which plants can be moved and manipulated to maximise growing efficiency without sacrificing convenience when access for working on the growing plant is required. However, it will be appreciated that each system can in principle operate independently.

In accordance with the preferred embodiment, when a plurality of carriages are disposed upon a track to constitute a complete system, means are preferably provided to effect translation between arrays within an individual carriage in such manner as to operate to translate all arrays in each carriage within a system simultaneously.

Both features of the invention are particularly suited to the growing of vine-like fruit and vegetable cropping plants under glass. In particular, the suspension means which support a growing row are preferably height adjustable, allowing for the height of a given row to be changed as plants cultivated upon its growing base become taller. Means are preferably provided about which the vine-like plants can be trained to grow upwards, and these means may comprise the suspension means, for example in that the suspension means comprises arrays of bars/tubes on which the strings supporting the plants are wound such that rotation of the tube will raise or lower the height of the plants and their growing media that are supported on that particular tube. A row of length adjustable suspension strings is suitably spaced to correspond with the plant spacing. The plant height is adjustable by means of winding or unwinding of the strings by rotation of the crop support bars from which the plants and troughs of growing media are suspended.

In accordance with the invention in a further aspect a method for the cultivation of plants in a controlled environment, and in particular for vine-like plants, comprises the steps of:
supporting on an elevated support framework carriage unit a plurality of growing rows incorporating a growing base capable of supporting a growing medium, and upwardly extending suspension means engaging with the support framework,
whereas the framework comprises a first array of generally parallel elongate row supporting members arrayed in pairs with a first spacing between each member and a second different spacing between adjacent pairs, and at least one second array of similarly arrayed elongate row supporting members, the space between pairs being such as to allow the first and second arrays to be interdigitated;
growing plants in a growing medium in or on the growing base;
actuating the translational means during cultivation as required.

In particular, the method comprises providing a plurality of such carriage units, mounted upon a track, so as to be translatable therelong in a direction perpendicular to the rows, which track extends through at least a portion of a growing volume to allow the carriages to be moved therearound.

The invention will now be described by way of example only with reference to figures 1 to 3 of the accompanying drawings wherein:
figure 1 is an illustration in plan view of a support framework in accordance with the invention comprising a pair of arrays of elongate row support members;
figures 2a to c represent in plan view alternative arrangements of the two frameworks of figure 1 in use;
figure 3 represents a possible mounting system for the two arrays of support members.

In the example given in the figures, the system described is a two-generational system in which two generations of crop, a and b, are intended to be grown. Individual row support members are labelled with the intended generation.

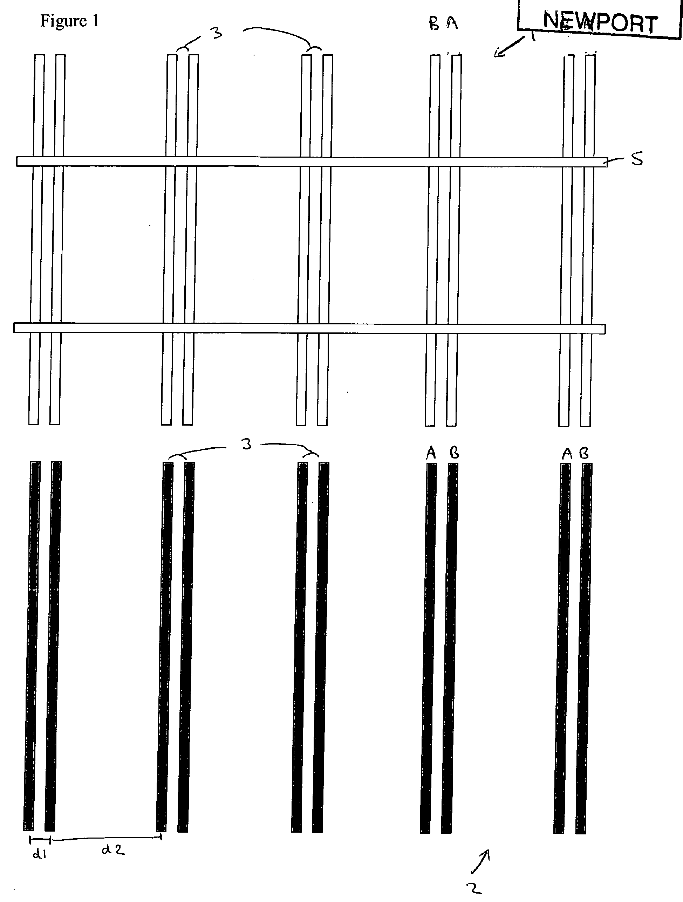

Referring first to figure 1, two frameworks of elongate row support members are shown in an exploded view. The figure illustrates a lower framework 1 and an upper framework 2, each consisting of a plurality of longitudinal support members 3 onto which will be supported growing trays for a suitable crop (not shown) in conventional manner of conventional design. The elongate support members 3 are arranged in paired arrays in which the space in between each member of a pair (d1) is significantly less than the spacing between each pair (d2). In the embodiment shown the two arrays are equivalently dimensioned. For most applications the two arrays are equivalently dimensioned, and the spacings d1 and d2 are both constant. For most applications this will be the simplest and most effective arrangement, but the invention is not limited to such arrangements.

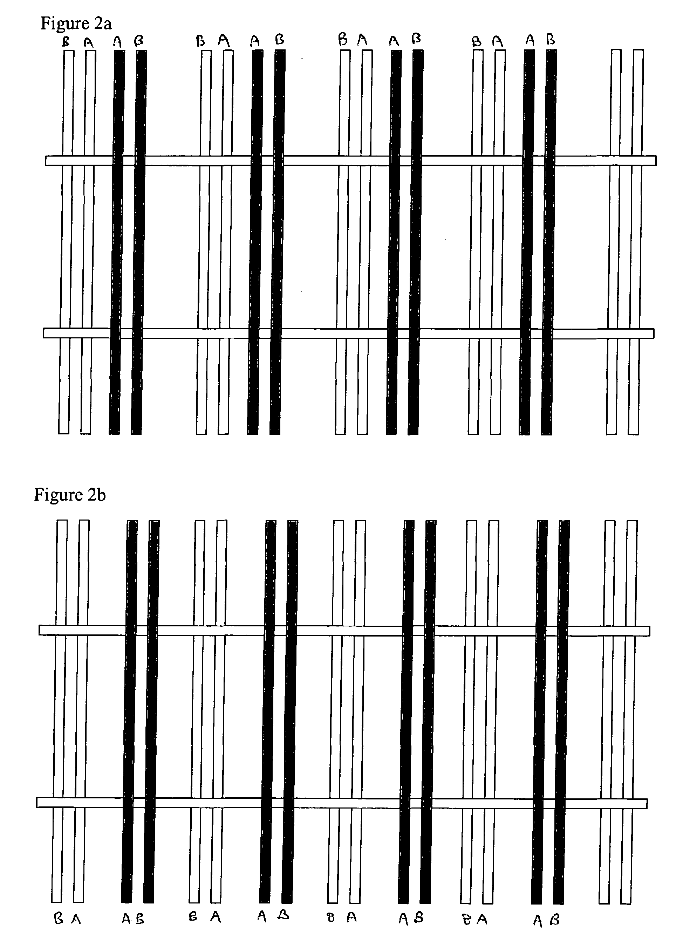

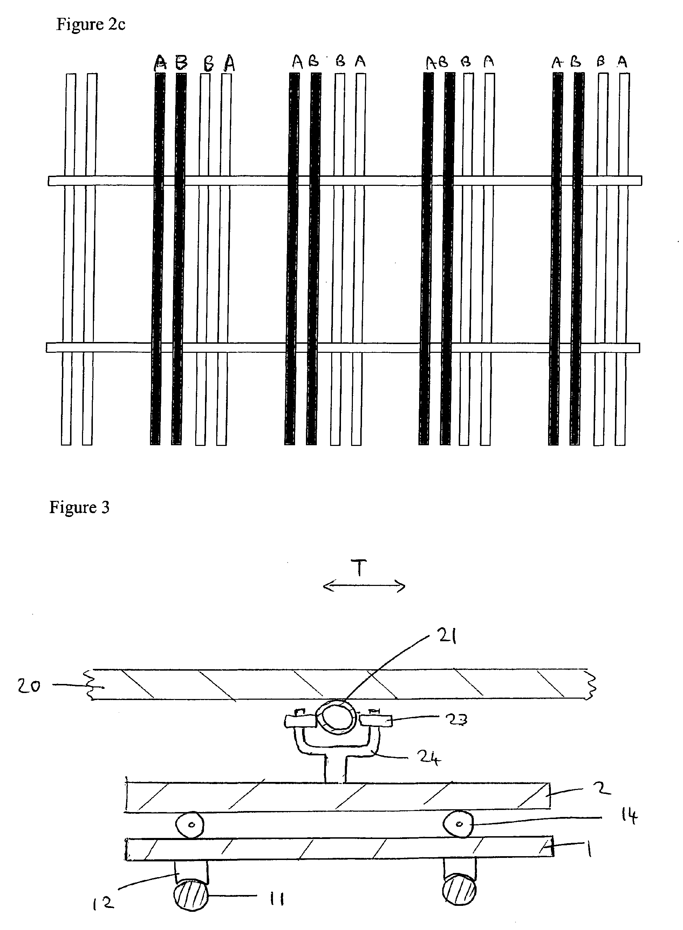

The lower array 1 includes a pair of transverse rail members 5 onto which the upper array will be mounted (see figure 2). The precise design of the other structural elements which will be necessary to constitute each array as an integral whole is not pertinent to the invention, and these have been therefore omitted for clarity.

In use in the example 2-generational system, the two members of a pair in each array carry different generations (A, B). The effect of this can be seen in figures 2a to 2c which represent alternative configurations of the apparatus once assembled. As before, the upper array is shaded. In all three figures the upper array is slideably mounted on the rails 5 so as to be translatable in a transverse direction.

In accordance with the arrangement of figure 2a, greater spacing is provided between the rows B. This might be useful for example in providing access to the rows B for cultivation or harvesting. It might also be useful, in relation to the example 2-generational system, in providing greater growing space and/or access to light for a generation B which is at a more advanced state of development. The contrary position is shown in figure 2c, where by sliding the upper array relative to the lower array a situation is created where a greater gap is provided between the rows A. Again, this might be done to allow access to rows A, or to allow them greater space for cultivational reasons. An intermediate state is represented by figure 2b, where the rows are evenly spaced. In the example, the rows are still not perfectly evenly spaced, although arrangements of framework can be envisaged where this could be achieved. Such an arrangement might be desirable for example if single generational growth was envisaged.

Movement of the rows relative to each other is enabled for all of the reasons given, either to allow access between rows, or to accommodate different generations of growth or growing conditions during the season, or to optimise access to light over the course of a day. For example, it might be that a configuration more like figure 2b would be preferred at the height of the day, with a more open configuration being more effective when the sun is lower in the sky.

An example arrangement of the preferred embodiment, whereby an individual carriage such as is represented in figures 1 and 2 is mounted on a rail system to be translated about a growing area, as part of a system comprising a plurality of such carriages, is illustrated in figure 3.

The lower array 1 is mounted on longitudinal rails 11 by means of carriages 12, which may be provided with suitable wheels, sliding engagement bearings or the like. In this way, the lower array 1, and in the default state the entire apparatus unit comprised of both arrays (1, 2) is translatable longitudinally relative to a row direction. A network of rails is provided in a suitable arrangement to provide a continuous circuit as hereinbefore described in at least a part of the growing volume, so that multiple arrays can be reorganised within the volume.

Wheels 14 provided between the lower array 1 and upper array 2 make possible a translational motion therebetween. The translational drive means which effects this translational motion in a transverse direction makes use of apparatus which will already be familiar in the glasshouse environment. For example from the operation of vents and the like in the roof, in the form of the actuating rod 20. The actuating rod 20 extends transversely relative to the row direction within the growing space. A tubular guide rail 21 is engaged by wheels 23 provided on an upward extension 24 projecting from the upper array 2. If the actuating rod 20 is stationary, the effect of the guide rail 21, in conjunction with the primary rails 11, is that the entire carriage will merely translate in a longitudinal direction. Movement of the actuating member 20 will cause the upper array 2 to slide in a transverse direction relative to the lower array 1, and so give effect to the variation of distance between rows discussed above.

## Claims

1. An apparatus for the cultivation of plants in a controlled environment comprising an elevated support framework suitable for use with a growing system of the type comprising a plurality of growing rows incorporating a growing base capable of supporting a growing medium, and upwardly extending suspension means engaging with the support framework, the said framework comprising a first array of generally parallel elongate row supporting members arrayed in pairs with a first spacing between each member and a second different spacing between adjacent pairs, at least one second array of similarly arrayed elongate row supporting members, the space between pairs being such as to allow the first and second arrays to be interdigitated; the system further comprising means to translate the at least one second array transversely relative to the first array.

2. An apparatus in accordance with claim 1 to support two generations of growth and comprising two arrays of elongate support members wherein on each array of support members a first support member in each pair should carry a first generation, and a second support member in each pair should carry a second generation.

3. An apparatus in accordance with claim 1 or claim 2 wherein the individual arrays making up the elevated support framework are disposed in a generally horizontal planar array vertically above one another.

4. An apparatus in accordance with any preceding claim wherein at least the second array is translatable in a transverse direction relative to the first array, by provision of wheels, bearings, sliding contact surfaces, or other like means to maintain a sliding and/or rolling contact between the two arrays.

5. An apparatus in accordance with claim 4 comprising exactly two arrays one above the other, an upper array being translatable relative to a lower array on suitable translational means.

6. An apparatus in accordance with claim 5 wherein the lower array comprises transverse guide rails or the like on which rolling or sliding engagement means such as wheels, carriages or the like associated with the second array are placed to facilitate the necessary translational motion.

7. An apparatus in accordance with any preceding claim wherein at least one apparatus unit is provided further arranged to be translatable in a longitudinal direction relative to the rows.

8. An apparatus in accordance with claim 7 wherein an apparatus unit comprises a pair of framework arrays, one disposed above the other, and one of the said pairs of arrays, for example the lower array, is provided with suitable means to effect translational movement in a longitudinal direction within a growing environment, and the other of the pair of arrays, for example the upper array, is provided with means to effect transverse translational movement relative to the first array.

9. An apparatus in accordance with claim 7 or claim 8 wherein the apparatus unit is translated in a longitudinal direction via translational means comprising elevated guide rails onto which a carriage comprised of the apparatus unit may be mounted for translational movement about a growing space.

10. A system for the cultivation of plants in a controlled environment comprises at least one elevated track on which are mounted so as to be translatable therealong a plurality of carriages comprising apparatus units in accordance with one of claims 7 to 9.

11. A system in accordance with claim 10 wherein the track is at least partially disposed within a growing volume, comprising an at least partial volume enclosure so set up as to allow growing conditions within the growing volume to be varied from ambient.

12. A system in accordance with claim 11 wherein a separate working area is provided either within or external to the growing volume, wherein conditions differ from those in the growing volume, and the at least one track extends partly within the growing volume and partly within the working area, permitting transfer of a carriage unit between the growing volume and the working area.

13. An apparatus or system for plant cultivation comprising an apparatus or system in accordance with any preceding claim provided in conjunction with a plurality of growing rows each incorporating a growing base such as a trough capable of supporting a growing medium, and upwardly extending suspension means engaging with the support framework.

14. An apparatus or system in accordance with any preceding claim wherein the suspension means are height adjustable, allowing for the height of a given row to be changed as plants cultivated upon its growing base become taller.

15. A method for the cultivation of plants in a controlled environment, and in particular for vine-like plants, comprises the steps of:
supporting on an elevated support framework carriage unit a plurality of growing rows incorporating a growing base capable of supporting a growing medium, and upwardly extending suspension means engaging with the support framework,
wherein the framework comprises a first array of generally parallel elongate row supporting members arrayed in pairs with a first spacing between each member and a second different spacing between adjacent pairs, and at least one second array of similarly arrayed elongate row supporting members, the space between pairs being such as to allow the first and second arrays to be interdigitated;
growing plants in a growing medium in or on the growing base;
actuating the translational means during cultivation as required.

16. The method of claim 15 wherein a plurality of such carriage units are provided, mounted upon a track, so as to be translatable therelong in a direction perpendicular to the rows, which track extends through at least a portion of a growing volume to allow the carriages to be moved therearound.
